# EUROPÄISCHE PATENTSCHRIFT

(11) **EP 3 844 411 B1**
(45) Veröffentlichungstag und Bekanntmachung des Hinweises auf die Patenterteilung: **03.08.2022**
(21) Anmeldenummer: 19783411.2
(22) Anmeldetag: 26.08.2019
(51) Int. Cl.: F16C 33/12, F16C 17/24, F16C 41/00, F16C 43/00, F16C 17/02, G01L 5/00

(54) **GLEITLAGERELEMENT**
PLAIN BEARING ELEMENT
ÉLÉMENT DE PALIER LISSE

(30) Priorität: 29.08.2018 AT 507402018
(43) Veröffentlichungstag der Anmeldung: 07.07.2021
(73) Patentinhaber: Miba Gleitlager Austria GmbH, 4663 Laakirchen (AT)
(72) Erfinder: HAMDARD, Kamal, Gmunden 4810 (AT)
(74) Vertreter: Burger, Hannes
(86) Internationale Anmeldenummer: PCT/AT2019/060271
(87) Internationale Veröffentlichungsnummer: WO 2020/041808

(56) Entgegenhaltungen:
- EP-A1- 0 844 469
- EP-A1- 1 058 106
- DE-A1-102007 049 041
- DE-A1-102012 022 113
- JP-A- 2009 254 163
- JP-A- 2014 074 641
- US-A1- 2015 049 970
- US-A1- 2016 208 849

## Beschreibung

Die Erfindung betrifft ein Gleitlagerelement umfassend eine erste Schicht mit einer radial inneren Oberfläche, wobei auf der radial inneren Oberfläche der ersten Schicht eine Messvorrichtung angeordnet ist, die in der angegebenen Reihenfolge eine erste vollflächig angeordnete elektrische Isolierschicht, eine zur Ausbildung von Leiterbahnen strukturierte Sensorschicht und eine zweite vollflächig angeordnete elektrische Isolierschicht aufweist, wobei auf der zweiten elektrischen Isolierschicht eine Gleitschicht vollflächig angeordnet ist.

Weiter betrifft die Erfindung ein Gleitlager umfassend eine Lageraufnahme mit einer radial inneren Oberfläche und zumindest ein Gleitlagerelement, dass an der radial inneren Oberfläche der Lageraufnahme anliegend angeordnet ist.

Zudem betrifft die Erfindung ein Verfahren zur Herstellung eines Gleitlagerelementes, nach dem auf einer radial inneren Oberfläche einer ersten Schicht eine Messvorrichtung ausgebildet wird, wozu in der angegebenen Reihenfolge eine erste elektrische Isolierschicht vollflächig, ein Sensorschicht, die zur Ausbildung von Leiterbahnen strukturiert wird, und eine zweite elektrische Isolierschicht vollflächig abgeschieden werden, wobei auf der zweiten elektrischen Isolierschicht eine Gleitschicht vollflächig angeordnet wird.

In den letzten Jahren erlangte die sensorische Überwachung von Gleitlagern eine immer größere Bedeutung. Neben der indirekten Messung von Gleitlagerparametern steht zunehmend auch die Anordnung von Sensoren im oder in unmittelbarer Nähe zum Schmierspalt im Vordergrund der Entwicklung. Problematisch sind dabei nicht nur die Umweltbedingungen für die Sensorik, sondern auch die Gleitlagern eigenen mechanischen Ausprägungen, wie beispielsweise das Vorhandensein von rotierenden Bauteilen. Beispielhaft sei auf die AT 408 900 B verwiesen, aus der eine Vorrichtung zum Überwachen eines Gleitlagers, das eine in einem Stützkörper eingespannte Lagerschale aufweist, bekannt ist, mit wenigstens einem im Lagerschalenbereich angeordneten Messfühler für temperaturabhängige Messsignale und mit einer Auswerteschaltung für die Messsignale. Der Messfühler ist als Druckfühler für in Umfangsrichtung der Lagerschale wirksame Druckkräfte oder für radiale Druckkräfte zwischen Lagerschale und Stützkörper ausgebildet.

Aus der US 2016/0208849 A1 ist ein Gleitlager und ein Verfahren zu seiner Herstellung bekannt. Das Gleitlager weist ein metallisches Substrat, eine erste elektrisch isolierende Schicht auf dem metallischen Substrat, eine elektrische Komponente auf der elektrisch isolierenden Schicht, und eine zweite elektrische isolierende Schicht auf. Die beiden elektrisch isolierenden Schichten sind als Gleitlackschichten ausgebildet.

Aus der JP 2014-074641 A ist ein Gleitlager mit einem Sensor bekannt. Der Sensor umfasst eine sensitive Schicht zum Erfassen einer auf einem Lager bereitgestellten physikalischen Größe. Auf der sensitiven Schicht ist ein Oxidfilm und auf diesem ein Siliziumnitridfilm angeordnet. Unterhalb der sensitiven Schicht ist ebenfalls eine Isolierschicht ausgebildet. Der Sensor steht in direktem Kontakt mit der gelagerten Welle.

Die DE 10 2007 049 041 A1 beschreibt ein Gleitlager, umfassend einen Lagerrücken, eine Laufschicht aus Messing, Bronze oder Al-Bronze, eine metallische Diffusionssperrschicht, eine Gleitschicht aus einer Al-Legierung und eine Einlaufschicht, die eine Sputterschicht aus Bi oder einer Bi-Legierung mit einem Bi-Gehalt oberhalb 90 Gew.-% ist, und die mit der Gleitschicht einen Übergangsbereich bildet, der eine Materialdurchmischung aus den Komponenten von Gleitschicht und Einlaufschicht aufweist.

Die JP 2009-254163 A beschreibt eine elektrische Energieerzeugungseinheit, die an einer Pleuelstange eines Verbrennungsmotors vorgesehen ist, und eine Gewichtseinheit zum Aufbringen einer Kraft auf die Energieerzeugungseinheit aufweist, wobei die Gewichtseinheit auf die Stromerzeugungseinheit durch die Bewegung der Pleuelstange wirkt, um elektrischen Strom zu erzeugen.

Aus der DE 10 2012 022 113 A1 ist eine Kraftmessvorrichtung bekannt, die auf zumindest einem Teil einer Oberfläche eines Trägers ein Sensorschichtsystem umfasst, das zumindest eine kristalline Schicht mit piezoelektrischen Eigenschaften aufweist, die auf einem Festkörperaktor aufgebracht ist und zumindest eine Verschleißschutzschicht mit Gleiteigenschaften umfasst, wobei die piezoelektrische Schicht aus kristallinem Aluminiumnitrid besteht, das eine hexagonale Kristallstruktur mit ausgeprägter Kristallorientierung aufweist. Zwischen der Oberfläche des Festkörperaktors und der kristallinen Aluminiumnitrid-Schicht ist zumindest eine elektrisch-leitende Schicht angebracht, die zumindest eine metallische Schicht aus zumindest einem Metall beinhaltet, welches - wenn oxidiert - ein elektrisch-isolierendes Oxid bildet, das mechanisch besser an der Unterlage haftend und thermisch stabiler als Molybdän(VI)-oxid ist.

Aus der EP 0 844 469 A1 ist eine mechanisch beanspruchbare Komponente bekannt, umfassend ein Substrat, eine darauf angeordnete isolierende Schicht und mindestens eine darauf angeordnete Funktionsschicht mit sensorischen Eigenschaften, wobei die Schichten aus amorphem Kohlenwasserstoff oder aus Bornitridsystemen oder vergleichbaren Systemen bestehen und sich durch Dotierung mit unterschiedlichen anderen Materialien und/oder unterschiedliche physikalische Beeinflussung unterscheiden.

Die US 2015/049970 A1, das die Merkmale des Oberbegriffs der Ansprüche 1 und 18 offenbart, beschreibt ein Gleitlager umfassend einen Laufring, ein Verschleißfutter und einen kapazitiven Sensor, der innerhalb oder hinter dem Verschleißfutter positioniert ist, um den Verschleiß des Verschleißfutters zu messen. Der Sensor weist eine erste elektrische Isolierschicht, eine Sensorschicht und eine zweite elektrische Isolierschicht auf.

Die EP 1 058 106 A1 beschreibt eine Wälzpaarung mit zwei gegeneinander laufenden, druckbelasteten Wälzelementen, wobei auf der Oberfläche mindestens eines der Wälzelemente mindestens ein Dünnschichtsensor angeordnet ist, wobei der Dünnschichtsensor eine tribologische Funktionsschicht, die den Sensor nach außen abschließt, sowie eine sensorische Schicht, die zwischen der Oberfläche des Wälzelementes und der tribologischen Funktionsschicht angeordnet ist, aufweist.

Der vorliegenden Erfindung liegt die Aufgabe zugrunde, ein Gleitlagerelement mit einem Sensor zur Erfassung von Betriebsparametern, hinsichtlich der Einsatzeigenschaften zu verbessern.

Die Aufgabe wird bei dem eingangs genannten Gleitlagerelement dadurch gelöst, dass die erste elektrische Isolierschicht unmittelbar auf der gesamten radial inneren Oberfläche der ersten Schicht mit einem PVD-Verfahren abgeschieden ist, dass weiter auch die Sensorschicht und die zweite elektrische Isolierschicht mit einem PVD-Verfahren abgeschieden sind, wobei die Sensorschicht auf der gesamten radial inneren Oberfläche der ersten elektrischen Isolierschicht vollflächig abgeschieden und zur Ausbildung der Leiterbahnen strukturiert ist und die zweite elektrische Isolierschicht auf die gesamte radial innere Oberfläche der Sensorschicht vollflächig abgeschieden ist, und dass die Gleitschicht eine mittels eines PVD-Verfahrens abgeschiedene Schicht oder eine Gleitlackschicht ist und auf der radial inneren Oberfläche der zweiten elektrischen Isolierschicht vollflächig abgeschieden ist.

Weiter wird die Aufgabe bei dem eingangs genannten Gleitlager dadurch gelöst, dass das zumindest eine Gleitlagerelement erfindungsgemäß ausgebildet ist.

Zudem wird die Aufgabe der Erfindung mit dem eingangs genannten Verfahren gelöst, nach dem die erste elektrische Isolierschicht unmittelbar auf der gesamten radial inneren Oberfläche ersten Schicht mit einem PVD-Verfahren abgeschieden wird, weiter auch die Sensorschicht und die zweite elektrische Isolierschicht mit einem PVD-Verfahren abgeschieden werden, wobei die Sensorschicht auf der gesamten radial inneren Oberfläche der ersten elektrischen Isolierschicht vollflächig abgeschieden und zur Ausbildung der Leiterbahnen strukturiert wird und die zweite elektrische Isolierschicht auf die gesamte radial innere Oberfläche der Sensorschicht vollflächig abgeschieden wird, und dass die Gleitschicht mittels eines PVD-Verfahrens abgeschieden wird oder als Gleitlackschicht ausgebildet wird und auf der radial inneren Oberfläche der zweiten elektrischen Isolierschicht vollflächig abgeschieden wird.

Von Vorteil ist dabei, dass durch die zusätzliche Anordnung einer Gleitschicht die Messvorrichtung besser vor dem Einfluss der rotierenden Welle geschützt werden kann. Zudem kann damit ein Gleitlagerelement zur Verfügung gestellt werden, dass hinsichtlich der tribologischen Eigenschaften vergleichbar ist zu derzeit bekannten Gleitlagerelementen, obwohl das Gleitlagerelement mit einer Messsensorik ausgestattet ist. Aufgrund des gewählten Aufbaus des Gleitlagerelementes können für die Gleitschicht auch metallische Schichten verwendet werden.

Die Gleitschicht ist eine mittels eines PVD-Verfahrens abgeschiedene Schicht, insbesondere eine Sputterschicht. Diese Schichten haben den Vorteil, dass sie ohne weitere Schutzmaßnahmen treffen zu müssen, direkt auf die Messvorrichtung, d.h. auf die zweite elektrische Isolationsschicht, aufgebracht werden können. Zudem haben diese Gleitschichten sehr gute tribologische Eigenschaften, insbesondere in Hinblick auf die Dauerfestigkeit, wodurch das Gleitlagerelement insgesamt bessere Eigenschaften aufweisen kann und auch die Messvorrichtung besser vor negativen mechanischen Einflüssen geschützt werden kann.

Die Gleitschicht kann auch eine Gleitlackschicht sein. Diese ist ebenso wie eine PVD-schicht einfach auftragbar, d.h. ohne weitere Schutzmaßnahmen für die Messvorrichtung treffen zu müssen. Von Vorteil ist dabei auch, dass Unebenheiten in der Oberfläche der Messvorrichtung, auf der die Gleitschicht aufgetragen wird, einfacher ausgeglichen werden können.

Gemäß einer Ausführungsvariante der Erfindung kann vorgesehen sein, dass auf der Gleitschicht eine Einlaufschicht angeordnet ist, insbesondere eine Einlaufschicht aus einem Gleitlack. Durch die Einlaufschicht wird eine raschere Anpassung der Oberflächen der Gleitpartner erreicht, wodurch das Gleitlagerelement rascher nur einer betriebsüblichen Belastung ausgesetzt ist. Es können damit unregelmäßige bzw. überraschende Überbelastungen der Messvorrichtung besser vermieden werden, sodass auch diese rascher nur mehr den betriebsüblichen Belastungen ausgesetzt ist.

Zumindest eine der ersten und der zweiten Isolierschicht kann nach einer anderen Ausführungsvariante der Erfindung durch Al₂O₃ und/oder SiO₂ gebildet sein. Im Vergleich zu anderen elektrische isolierenden Werkstoffen weisen diese Oxide neben der guten Oxidationsbeständigkeit eine gute Temperaturstabilität und einen relativ hohen Abrasionswiderstand auf, wodurch die Messvorrichtung höheren Belastungen ausgesetzt werden kann.

Von Vorteil ist weiter, wenn zumindest eine der ersten und der zweiten Isolierschicht eine Schichtdicke zwischen 2 µm und 8 µm aufweist. Durch diese relativ dünne Ausführung der (spröden) Isolierschicht(en) kann eine Delamination der Schichten besser vermieden werden.

Nach einer weiteren Ausführungsvariante der Erfindung kann vorgesehen sein, dass die Sensorschicht durch Chrom oder eine Chrom-Nickel-Legierung gebildet ist. Es kann damit die Adhäsion zwischen den Isolierschichten und der Sensorschicht verbessert werden, wodurch die Messvorrichtung insgesamt einer höheren Belastung ohne die Gefahr einer Delamination ausgesetzt werden kann. Zudem kann damit auch der Einfluss auf die Messtemperatur durch das Sensormaterial geringgehalten werden.

Aus den zur Dicke zumindest einer der Isolierschichten genannten Gründen kann nach einer anderen Ausführungsvariante der Erfindung vorgesehen sein, dass die Sensorschicht eine Schichtdicke zwischen 0,1 µm und 4 µm aufweist.

Bevorzugt ist nach einer weiteren Ausführungsvariante der Erfindung vorgesehen, dass die Sensorschicht zumindest in der am stärksten belasteten Zone der Gleitschicht angeordnet ist, um damit eine Beschädigung des Gleitlagerelementes möglichst frühzeitig erkennen zu können. Gleichzeitig ist damit die Messvorrichtung einem relativ hohen Druck ausgesetzt, der einer Delamination der Schichten der Messvorrichtung ebenfalls entgegenwirkt.

Zur einfacheren Kontaktierung der Sensorschicht mit weiteren elektrischen Komponenten kann gemäß einer Ausführungsvariante der Erfindung vorgesehen sein, dass an einer radial äußersten Schicht elektrische Kontakte angeordnet sind, die mit der Sensorschicht elektrisch leitend verbunden sind. Das Gleitlager selbst kann dabei gemäß einer Ausführungsvariante der Erfindung an der radial inneren Oberfläche der Lageraufnahme elektrische Kontakte aufweisen, sodass die Kontaktierung der Messvorrichtung des Gleitlagerelementes bereits durch das Einsetzen des Gleitlagerelementes in die Lageraufnahme automatisch hergestellt wird.

Es kann nach einer weiteren Ausführungsvariante der Erfindung vorgesehen sein, dass die Sensorschicht mit einer Datenübertragungseinrichtung verbunden ist, wobei die Datenübertragungseinrichtung zur drahtlosen Datenübertragung ausgebildet ist. Durch die Vermeidung einer drahtgebundenen Datenübertragung kann diese einfacher an weitere Systeme erfolgen, beispielsweise in einem Maschinenhaus oder in einem Kraftfahrzeug.

Zur Erhöhung der Autarkie der Messvorrichtung kann vorgesehen sein, dass die Sensorschicht mit einer Energieerzeugungseinrichtung verbunden ist. Es kann damit auch einem Ausfall der Messvorrichtung aufgrund von Energiemangel besser vorgebeugt werden.

Gemäß einer weiteren Ausführungsvariante der Erfindung kann die Sensorschicht mit einer Messbrücke (Vierleitermessung) verbunden sein, um damit Störungen des Messsignals aufgrund von Anschlusswiderständen bzw. Leitungswiderständen besser beherrschen zu können.

Weiter kann nach einer anderen Ausführungsvariante der Erfindung vorgesehen sein, dass die Sensorschicht eine Leiterschleife für die Temperaturkompensation bei der Messung aufweist, wodurch die Messwertgenauigkeit verbessert werden kann.

Um die Kompaktheit der Anordnung zur Bestimmung von Betriebsparametern des Gleitlagerelementes zu verbessern, kann gemäß einer Ausführungsvariante der Erfindung vorgesehen sein, dass an einer radialen Gleitlagerelementstirnfläche eine Vertiefung ausgebildet ist, in der eine Telemetrie-Vorrichtung angeordnet ist.

Es kann aber auch vorgesehen sein, dass die Telemetrie-Vorrichtung nach einer anderen Ausführungsvariante der Erfindung an oder zumindest teilweise in der Lageraufnahme angeordnet ist.

Vorzugsweise wird nach einer Ausführungsvariante des Verfahrens die Sensorschicht vollflächig abgeschieden wird und danach strukturiert, da damit die Herstellung der Messvorrichtung einfacher und schneller durchgeführt werden kann. Das Gleitlagerelement kann damit wirtschaftlicher und somit mit besserer Akzeptanz der Kunden gestaltet werden. Für die Strukturierung kann gemäß einer Ausführungsvariante dazu ein Laser und/oder zumindest eine Maske verwendet werden, wodurch die Herstellung einerseits großtechnisch in Serie mittels erfolgen kann. Zudem kann durch die Verwendung eines Lasers eine Einzelfertigung bzw. eine Kleinserienfertigung der Gleitlagerelemente einfach dargestellt werden.

Eine weitere Ausführungsvariante der Erfindung sieht vor, dass zumindest eine der Schichten der Messvorrichtung mittels Reaktivsputtern hergestellt wird, wodurch die Schichtzusammensetzung einfach verändert und beeinflusst werden kann.

Zum besseren Verständnis der Erfindung wird diese anhand der nachfolgenden Figuren näher erläutert.

Es zeigen jeweils in vereinfachter, schematischer Darstellung:
- Fig. 1: ein Gleitlagerelement in Seitenansicht;
- Fig. 2: ein Gleitlagerelement in Draufsicht auf die Sensorschicht;
- Fig. 3: ein Gleitlagerelement in Schrägansicht mit teilweise entfernten Schichten;
- Fig. 4: eine Lageraufnahme in Schrägansicht;
- Fig. 5: einen Ausschnitt aus einem Gleitlager;
- Fig. 6: ein Detail aus dem Ausschnitt des Gleitlagers nach Fig. 5;
- Fig. 7: ein Detail einer anderen Ausführungsvariante der Gleitlageranordnung;
- Fig. 8: ein Pleuel;
- Fig. 9: einen Ausschnitt aus einem Gleitlagerelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

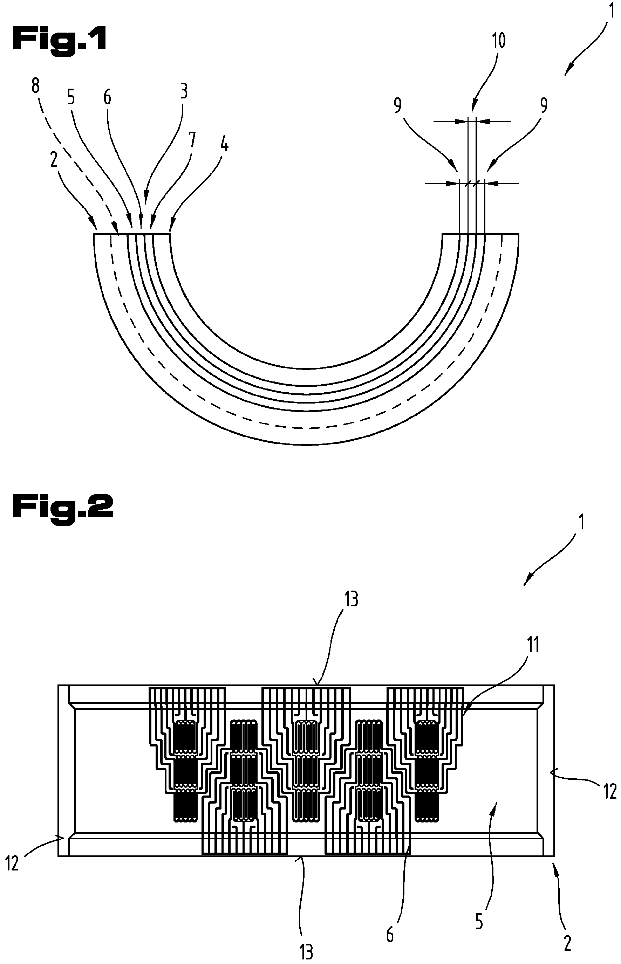

Fig. 1 zeigt ein Gleitlagerelement 1 in Form eines Mehrschichtgleitlagers. Das Gleitlagerelement 1 ist als Halbschale ausgebildet, deckt also einen Winkelbereich von 180 ° ab.

Dargestellt ist eine fünfschichtige Variante bestehend aus einer ersten Schicht 2, die bei dieser Ausführungsvariante die Stützschicht des Gleitlagerelementes 1 bildet, einer unmittelbar auf der ersten Schicht 2, d.h. auf einer radial inneren Oberfläche der Schicht 2, angeordneten Messvorrichtung 3, und einer unmittelbar auf der Messvorrichtung 3 angeordneten Gleitschicht 4. Die Messvorrichtung 3 besteht aus zumindest drei Schichten, nämlich unmittelbar an der ersten Schicht 2 des Gleitlagerelementes 1 anliegende erste elektrische Isolierschicht 5, eine unmittelbar an der ersten elektrischen Isolierschicht 5 anliegende Sensorschicht 6, und eine unmittelbar an der Sensorschicht 6 anliegende zweite elektrische Isolierschicht 7.

Obwohl die dreischichtige Ausführung der Messvorrichtung 3 die bevorzugte ist, kann diese auch mehr als drei Schichten aufweisen. So kann z.B. zumindest eine der beiden elektrischen Isolierschichten 5, 7 aus mehreren, übereinander angeordneten Teilschichten bestehen, die auch unterschiedlich zusammengesetzt sein können. Weiter kann auch die Sensorschicht 6 aus mehreren, übereinander angeordneten Teilschichten bestehen, die auch unterschiedlich zusammengesetzt sein können.

Das Gleitlagerelement 1 kann aber auch weitere Schichten aufweisen. Beispielsweise kann das Gleitlagerelement 1 auch eine Lagermetallschicht 8 aufweisen, die zwischen der Messvorrichtung 3 und der Stützschicht des Gleitlagerelementes angeordnet ist. In diesem Fall ist bildet die Lagermetallschicht 8 die voranstehend genannte erste Schicht 2, sodass also die Ausführungen zur ersten Schicht 2 in dieser Beschreibung für diese Ausführungsvariante des Gleitlagerelementes 1 auf die Lagermetallschicht 8 anzuwenden sind.

Zudem kann das Gleitlagerelement 1 noch weitere Schichten aufweisen, wie beispielsweise zwischen der Lagermetallschicht 8 und der Stützschicht eine Haftmittelschicht und/oder eine Diffusionssperrschicht oder auf der Gleitschicht 4 eine Einlaufschicht. Ebenso kann auf der Rückseite der Stützschicht eine Antifrettingschicht angeordnet sein.

Obwohl das Gleitlagerelement 1 als Halbschale dargestellt ist, kann es im Rahmen der Erfindung auch anders ausgeführt sein, beispielsweise als Lagerbuchse. Generell sind Gleitlagerelemente 1 möglich, die einen von 180 ° abweichenden Winkelbereich überdecken.

Die Stützschicht besteht aus einem Werkstoff, welcher dem Gleitlagerelement 1 die erforderliche Strukturfestigkeit verleiht, beispielsweise aus einem Messing oder einer Bronze. In der bevorzugten Ausführungsvariante des Gleitlagerelementes 1 besteht sie jedoch aus einem Stahl. Sofern das Gleitlagerelement 1 als Direktbeschichtung ausgeführt ist, beispielsweise der radial inneren Oberfläche einer Lageraufnahme oder der Mantelfläche einer Welle, wird die Stützschicht durch den Werkstoff des direktbeschichteten Bauteils gebildet. Zudem ist in diesem Fall die Stützschicht nicht als herkömmliche Schicht in strengen Sinne des Wortes zu bezeichnen. Im Zusammenhang mit der Erfindung umfasst der Begriff "Stützschicht" aber auch derartige Ausführungen.

Als Lagermetallschicht 8 können unterschiedlichste Legierungen eingesetzt werden. Beispiele hierfür sind Lagermetalle auf Aluminiumbasis, z.B. AlSn6CuNi, AlSn20Cu, AlSi4Cd, AlCd3CuNi, AlSi11Cu, AlSn6Cu, AlSn40, AlSn25CuMn, AlSi11CuMgNi, AlZn4Si. Beispielsweise kann die Lagermetallschicht 8 durch CuPb4Sn4Zn4, CuPb5Sn5Zn5, CuPb7Sn7Zn4, CuPb9Sn5, CuPb10Sn10, CuPb15Sn7, CuPb22Sn2, CuPb20Sn4, CuPb22Sn8, CuPb24Sn2, CuPb24Sn, CuPb24Sn4, CuSn5Zn, CuAl10Ni, CuSn10 gebildet sein. Für die Angaben zur Zusammensetzung aller angeführten Legierungsvarianten gilt ein Toleranzbereich von bis zu 5 Prozentpunkten.

Die Lagermetallschicht 8 kann mit einem herkömmlichen, aus der Gleitlagertechnik bekannten Verfahren auf der Stützschicht abgeschieden bzw. angeordnet werden. Beispielsweise kann ein Bimetall aus der Stützschicht und der Lagermetallschicht 8 durch Aufwalzen der Lagermetallschicht 8 hergestellt werden. Ebenso kann die Lagermetallschicht 8 auf die Stützschicht aufgegossen werden. Gegebenenfalls wird dieses Bimetall umgeformt und/oder spanabhebend bearbeitet.

Die Gleitschicht 4 kann aus herkömmlichen, in der Gleitlagertechnik hierfür bekannten Werkstoffen bestehen.

Die Gleitschicht 4 ist eine mittels eines PVD-Verfahrens abgeschiedene Schicht. Besonders bevorzugt ist die Gleitschicht eine Sputterschicht, insbesondere nach einem Kathodensputterverfahren hergestellt. Dazu kann die Abscheidung der Gleitschicht 4 in einem Prozessgas erfolgen, beispielsweise bestehend aus oder umfassend Argon.

Die Gleitschicht 4 kann aus einer Zinnbasislegierung oder einer Legierung mit dem Basiselemente Aluminium, wie z.B. AlSn20Cu1, Al-Bi15Cu1Ni1, oder durch eine Legierung mit Kupfer als Basiselement, wie z.B. CuPb27, CuPb25Sn3, CuPb25Ni3, oder durch Silber oder eine Legierung mit Silber als Basiselement, wie z.B. AgCu5, bestehen bzw. diese umfassen.

Für die Abscheidung mittels Sputterverfahren können folgende Parameter angewandt werden:
Spannung am Gleitlagerelementrohling auf dem die Gleitschicht 4 abgeschieden wird: -150 V bis 0 V
Prozessgas: Argon
Prozessgas-Druck: 3×10-4 bis 6×10-3 mbar,
Temperatur: 80 bis 160°C
Spannung an dem oder den Targets: -450 V bis -800 V
Beschichtungsrate: 0,1 µm/Minute bis 5 µm/Minute

Bekanntlich werden beim Sputtern Prozessgasatome auf ein Target beschleunigt und schlagen aus diesem die abzuscheidenden Metallatome heraus, die in weiterer Folge in Richtung auf den Gleitlagerelementrohling beschleunigt werden und sich auf dessen Oberfläche niederschlagen, sodass die Gleitschicht 4 aufgebaut wird. Da dieses Verfahren an sich prinzipiell bekannt ist, sei zu weiteren Details dazu auf den einschlägigen Stand der Technik verwiesen.

Die Abscheidung mittels eines PVD-Prozesses (Gasphasenabscheidung) wird bevorzugt, da diese abseits des thermodynamischen Gleichgewichtes stattfinden, sodass die Teilchendiffusion und Koagulation von Ausscheidungen verhindert werden kann.

Die Gleitschicht 4 kann aber auch mit einem Elektronenstrahlbedampfungsverfahren hergestellt sein.

Nach einer anderen Ausführungsvariante des Gleitlagerelementes 1 kann vorgesehen sein, dass die Gleitschicht 4 eine Gleitlackschicht ist, d.h. eine Polymerschicht, die aus einem Gleitlack hergestellt ist, beispielsweise durch Aufsprühen oder Aufstreichen oder Auftauchen des Gleitlacks und anschließendes Trocknen des Gleitlacks zur Polymerschicht.

Als Gleitlack kann prinzipiell jeder geeignete Gleitlack verwendet werden, der eine ausreichende Abriebfestigkeit und ein ausreichendes Gleitvermögen aufweist. Beispielseise kann eine Gleitlack auf PTFE-Basis eingesetzt werden.

Vorzugsweise wird jedoch ein Gleitlack auf Polyamidbasis eingesetzt, insbesondre auf Basis eines Polyamidimids, der zumindest einen Festschmierstoff enthält, wie beispielsweise MoS₂, Graphit, hexagonales BN, etc. Es ist weiter bevorzugt, wenn der Gleitlack sowohl MoS₂ als auch Graphit als Festschmierstoffe enthält.

Der Polymerschicht, die aus dem Gleitlack nach dessen Auftrag auf die Messvorrichtung 3 gebildet wird, kann eine Zusammensetzung von 20 Gew.-% bis 45 Gew.-% Polyamidimid, 30 Gew.-% bis 55 Gew.-% MoS₂ und 10 Gew.-% bis 25 Gew.-% Graphit aufweisen, mit der Maßgabe, dass die Summe aller Bestandteile der Polymerschicht sich zu 100 Gew.-% addiert.

Die Polymerschicht kann zur Erhöhung der mechanischen Festigkeit weitere Zusätze in einem Summenanteil von maximal 10 Gew.-% enthalten, wie beispielsweise Fasern, Hartstoffe, wie z.B. Carbide, Oxide, Nitride, beispielsweise CrO₂, Fe₃O₄, ZnO, Al₂O₃, SiO₂, SiC, Si₃N₄, etc.

Die Polymerschicht kann eine Schichtdicke aufweisen, die ausgewählt ist aus einem Bereich von 1 µm bis 40 µm, insbesondere von 3 µm bis 30 µm.

Die Polymerschicht weist vorteilhafterweise eine Härte nach Vickers auf, ausgewählt aus einem Bereich von 20 HV (0,01) bis 45 HV (0,01).

Wie voranstehend bereits ausgeführt, kann auf der Gleitschicht 4, d.h. auf deren radial inneren Oberfläche, auch eine Einlaufschicht angeordnet sein. In dieser Ausführungsvariante wird bevorzugt die Gleitschicht 4 als PVD-Schicht, insbesondere Sputterschicht, und die Einlaufschicht als Polymerschicht, die aus einem Gleitlack hergestellt ist, ausgeführt. Hinsichtlich der Werkstoffe hierfür sei auf die voranstehenden Ausführungen verwiesen.

Die erste und/oder die zweite elektrische Isolierschicht 5, 7 umfassen gemäß einer bevorzugten Ausführungsvariante Al₂O₃ und/oder SiO₂ bzw. bestehen daraus. In der bevorzugten Ausführungsvariante umfassen sowohl die erste elektrische Isolierschicht 5 als auch die zweite Isolierschicht 7 Al₂O₃ und/oder SiO₂ bzw. bestehen daraus.

Die erste und/oder die zweite Isolierschicht 5, 7 können aber auch aus anderen elektrisch isolierenden Werkstoffen bestehen, wie beispielsweise ZrO₂

Vorzugsweise weisen die erste und/oder die zweite Isolierschicht 5, 7 (besonders bevorzugt beide Isolierschichten 5, 7) aus voranstehend genannten Gründen eine Schichtdicke 9 auf, die ausgewählt ist aus einem Bereich von 2 µm bis 8 µm, insbesondere aus einem Bereich von 3 µm bis 5 µm.

Die Sensorschicht 6 umfasst gemäß einer weiteren bevorzugten Ausführungsvariante Chrom oder eine Chrom-Nickel-Legierung bzw. besteht daraus. Die Chrom-Nickel-Legierung kann insbesondere ein Chromanteil zwischen 15 Gew.-% und 25 Gew.-% aufweisen. Den Rest auf 100 Gew.-% bildet das Nickel. Beispielsweise kann die Chrom-Nickel-Legierung 20 Gew.-% Chrom und 80 Gew.-% Nickel aufweisen.

Die Sensorschicht 6 kann aber auch aus anderen elektrisch leitenden Werkstoffen bestehen bzw. diese umfassen, wie beispielsweise Ag, Pt, Cu-Basis-Werkstoffe wie CuNiMn.

Vorzugsweise weist die Sensorschicht 6 aus voranstehend genannten Gründen eine Schichtdicke 10 auf, die ausgewählt ist aus einem Bereich von 0,1 µm bis 4 µm, insbesondere aus einem Bereich von 0,2 µm bis 2 µm.

Mit der Messvorrichtung 3, insbesondere mit der Sensorschicht 6, ist es möglich zumindest einen Betriebsparameter im Betrieb des Gleitlagerelementes 1 zu erfassen, wie insbesondere die Temperatur und/oder den Druck im Schmiermittelspalt eines mit dem Gleitlagerelementes 1 ausgerüsteten Gleitlagers. Dazu kann die Veränderung der elektrischen Leitfähigkeit erfasst werden.

Für die Erfassung des Messwertes ist die Sensorschicht 6 entsprechend strukturiert, wie dies beispielhaft in Fig. 2 dargestellt ist. Für die bessere Darstellbarkeit dieser Strukturierung wurde in Fig. 2 auf die Darstellung der zweiten elektrischen Isolierschicht 7 und der Gleitschicht 4 (beide in Fig. 1 gezeigt) verzichtet.

Es sei jedoch darauf hingewiesen, dass die in Fig. 2 konkret dargestellte Anordnung von Leiterbahnen 11 nur beispielhaften und keinen limitierenden Charakter hat. Es sind - je nach zu messenden Parameter - auch andere Topographien der Sensorschicht 6 möglich.

Für die Herstellung der Leiterbahnen 11 wird in der bevorzugten Ausführungsvariante des Verfahrens auf der radial inneren Oberfläche der ersten Schicht 2 zuerst die erste elektrische Isolierschicht 5 abgeschieden. Diese wird auf der gesamten radial inneren Oberfläche der ersten Schicht 2 abgeschieden.

Auf diese erste elektrische Isolierschicht 5 wird dann die Sensorschicht 6 abgeschieden. Wiederum wird diese auf der gesamten radial inneren Oberfläche der ersten elektrischen Isolierschicht 5 vollflächig abgeschieden.

Nach der Abscheidung der Sensorschicht 6 wird diese zur Ausbildung der Leiterbahnen 11 strukturiert. Dabei werden die Bereiche der Sensorschicht 6 wieder entfernt, in denen keine Leiterbahnen 11 angeordnet sind. Aus der ursprünglich vollflächigen Sensorschicht 6 wird damit eine nur in diskreten Bereichen der ersten elektrischen Isolierschicht 5 angeordnete Sensorschicht 6.

Es sei darauf hingewiesen, dass es ausreichend ist, nur die Bereiche der Sensorschicht 6 im Bereich neben den Leiterbahnen 11 zu entfernen. Bereiche der Sensorschicht 6, in denen keine Leiterbahnen angeordnet sind, also beispielsweise bei dem Ausführungsbeispiel der Fig. 2 im Bereich von in Umfangsrichtung weisenden Stirnflächen 12, kann gegebenenfalls die ursprünglich abgeschiedene Sensorschicht 6 unbehandelt verbleiben.

Auf die strukturierte Sensorschicht 6 werden danach auf deren radial inneren Oberfläche die zweite elektrische Isolierschicht 7 und auf deren radial inneren Oberfläche die Gleitschicht 4 abgeschieden. Es ist damit ein Gleitlagerelement 1 mit zumindest einem integrierten Dünnschichtsensor entstanden.

Die Abscheidung der ersten elektrischen Isolierschicht 5 und der zweiten elektrischen Isolierschicht 7 und der Sensorschicht 6 erfolgt mittels eines PVD-Verfahrens (Physical Vapour Depsoition), insbesondere mit einem Sputterverfahren, bevorzugt mittels Magnetron-Sputter-Technologie. Weiter wird in der bevorzugten Ausführungsvariante des Verfahrens ein planarer Magnetron eingesetzt, d.h. ein Magnetron mit planarem Target.

Für die Abscheidung der Schichten können dabei folgende Parameter angewandt werden:
Sensorschicht 6:
   Spannung am Gleitlagerelementrohling: -150 V bis 0 V
   Prozessgasgemisch: Argon, Sauerstoff
   Prozessgas-Druck: 3×10⁻⁴ mbar bis 6×10-3 mbar,
   Temperatur: 100 °C bis 160 °C
   Spannung an dem oder den Targets: -450 V bis -800 V
   Beschichtungsrate: 0,1 µm/Minute bis 2 µm/Minute
Isolierschicht 5, 7:
   Spannung am Gleitlagerelementrohling: -120 V bis 0 V
   Prozessgasgemisch: Argon, Sauerstoff
   Prozessgas-Druck: 3×10⁻⁴ mbar bis 6×10⁻³ mbar,
   Volumsmischungsverhältnis Argon zu Sauerstoff >= 1,5:1
   Temperatur: 100 °C bis 160 °C
   Spannung an dem oder den Targets: -350 V bis -700 V
   Beschichtungsrate: 0,1 µm/Minute bis 1,5 µm/Minute

Es kann vorgesehen sein, dass der Übergang zwischen den einzelnen Schichten abrupt ausgebildet ist oder diese graduell ineinander übergehen. Beispielsweise kann der Übergang von der zweiten Isolierschicht 7 zur Gleitschicht 4 ausgehend von Al₂O₃ über AlₓO_{y} (x:y>2:3) über Al über AlSnₓ (x<20) zu AlSn20Cu ausgebildet sein. Alternativ oder zusätzlich dazu kann ausgehend von der ersten Isolierschicht 5 zur Sensorschicht 6 die Schichtabfolge wie folgt aussehen: Al₂O₃ -> AlₓO_{y} (x:y>2:3) -> Al -> Werkstoff der Sensorschicht 6. Die Schichtdicke des Übergangs von der zweiten Isolierschicht 7 zur Gleitschicht 4 kann zwischen 0,05 µm und 1,5 µm betragen. Die Schichtdicke des Übergangs von der ersten Isolierschicht 5 zur Sensorschicht 6 kann zwischen 0,001 µm und 0,1 µm betragen.

Es ist dabei nach einer weiteren Ausführungsvariante des Verfahrens möglich, dass zumindest einer der ersten und der zweiten elektrischen Isolierschichten 5, 7 und der Sensorschicht 6 (bevorzugt die erste und die zweite Isolierschicht 5, 7) mittels Reaktivsputtern hergestellt wird. Dabei wird die zumindest eine Schicht aus Atomen aus dem Target und aus Atomen aus der Gasatmosphäre in der Abscheidekammer, in der die Beschichtung durchgeführt wird, hergestellt. Es wird dazu ein reaktives Gas eingesetzt. Alternativ kann dieses reaktive Gas aber auch aus einem entsprechend zusammengesetzten Target, das z.B. Sauerstoff freisetzen kann, erzeugt werden. Das reaktive Gas bzw. seine ionisierten Bestandteile reagieren chemisch mit dem Targetmaterial bzw. den daraus erzeugten Atomen. Die entstehenden Verbindungen schlagen sich dann auf dem eingesetzten Gleitlagerelementrohling nieder. Auf diese Weise kann zum Beispiel beim reaktiven Sputtern von Aluminium in einem Sauerstoffplasma Al₂O₃ hergestellt werden. Läuft die Reaktion am Target ab, wird folglich das Reaktionsprodukt gesputtert.

Zum Reaktivsputtern der Schichten können die voranstehend genannten Parameter angewandt werden.

Neben den genannten Abscheideverfahren kann die Abscheidung mittels Elektronenstrahlbedampfungsverfahren erfolgen. Zudem besteht die Möglichkeit der Maskenbedampfung bzw. des Maskensputterns.

Die Strukturierung der Sensorschicht 6 wird gemäß einer Ausführungsvariante des Verfahrens mittels Energiestrahlung durchgeführt, vorzugsweise mit einem Laser und/oder unter Verwendung von zumindest einer Maske. Als Laser wird dazu insbesondere ein Ultrakurzpuls-Laser, bevorzugt ein sogenannter Femtosekundenlaser, eingesetzt. Von Vorteil ist dabei die exakte und rückstandsfreie Abtragung kleinster Materialmengen ohne wesentliche Beeinflussung des Substrats durch Wärmeübertragung.

Für die Strukturierung der Sensorschicht 6 mittels Laser können folgende Parameter angewandt werden:
Pulsdauern: ps-/fs-Bereich
Pulsenergie: 1 µJ bis 100 µJ
Pulsfolgefrequenzen 1 kHz- bis 800 MHz
Wellenlänge im Bereich 1 µm, da kommerziell verfügbar.
Fokussierung ca. 10 µm bis 100 µm (= Bearbeitungsauflösung)
Vorzugsweise fokussierte Strahlung, denkbar ist aber auch abbildend zu arbeiten oder mit Strahlformungskomponenten

Falls erforderlich können mit dem Laser zusätzlich Masken (z.B. aus Metall) verwendet werden, mit denen nicht zu entfernende Oberflächenbereiche vom Einfluss des Lasers abgeschattet werden.

Die Strukturierung der Sensorschicht 6 kann aber auch mit anderen Verfahren, gegebenenfalls wieder unter Verwendung von Masken, durchgeführt werden, beispielsweise mittels nasschemischer Ätzverfahren oder durch Trockenätzverfahren, wie z.B. Beschuss der zu strukturierenden Oberfläche mit Argonionen oder mit plasmaaktivierten Gasen.

Für die Kontaktierung der Sensorschicht 6 mit weiteren elektrischen bzw. elektronischen Komponenten, kann vorgesehen sein, dass die Leiterbahnen 11 in den Bereich von axialen Stirnflächen 13 des Gleitlagerelements 1 führen (d.h. die Stirnflächen 13, die in der axialer Richtung betrachtet werden) und auf diesen axialen Stirnflächen 13 Kontaktstellen ausgebildet sind, die elektrisch leitend mit Gegenkontaktstellen verbunden werden können.

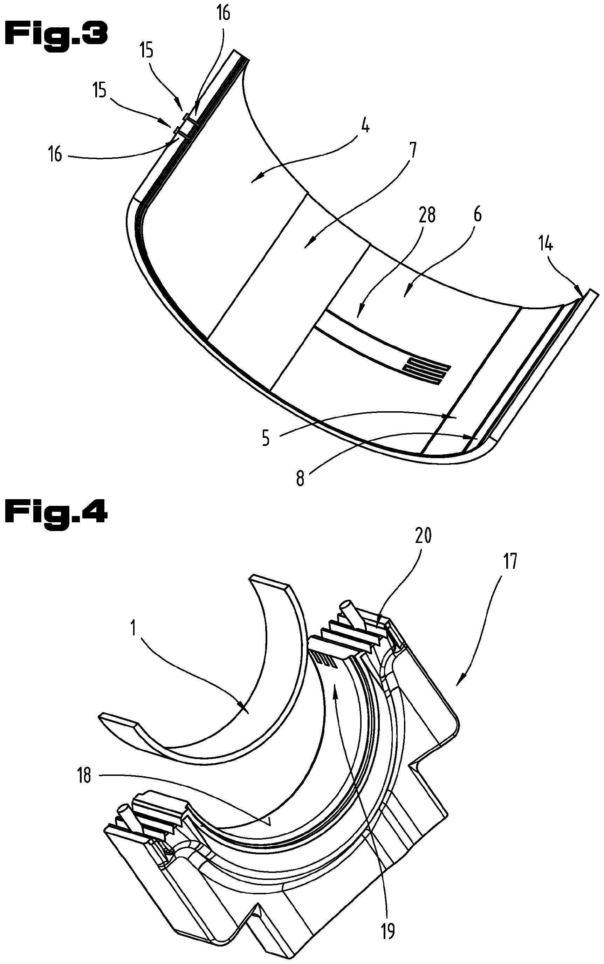

Nach einer anderen Ausführungsvariante des Gleitlagerelements 1 kann auch vorgesehen sein, dass an einer radial äußersten Schicht des Gleitlagerelementes 1, beispielsweise einer Stützschicht 14, elektrische Kontakte 15 angeordnet sind, die mit der Sensorschicht 6 elektrisch leitend verbunden sind, wie dies in Fig. 3 dargestellt ist. Diese Fig. 3 zeigt dabei eine Gleitlagerelement 1 mit einer radial äußeren Stützschicht 14, der darauf angeordneten Lagermetallschicht 8, der darauf angeordneten ersten elektrischen Isolierschicht 5, der darauf angeordneten Sensorschicht 6, der darauf angeordneten zweiten elektrischen Isolierschicht 7 und der darauf angeordneten Gleitschicht 4, wobei einzelne Schichten zur besseren Darstellung des Schichtaufbaus teilweise entfernt wurden.

Die radial äußerste Schicht ist in dieser Ausführungsvariante die bereits in der Beschreibung der Fig. 1 erwähnte Stützschicht 14. Die radial äußerste Schicht kann aber bei einem anderen Schichtaufbau auch durch eine andere Schicht gebildet sein.

Für die Verbindung der Sensorschicht 6 mit den elektrischen Kontakten können Durchbrüche 16, insbesondere Bohrungen durch die radial oberhalb der Sensorschicht 6 angeordneten Schichten des Gleitlagerelementes 1 vorgesehen sein, die mit einem elektrisch leitfähigen Werkstoff, z.B. Kupfer oder dem Werkstoff der Sensorschicht 6, ausgefüllt sind bzw. in denen dieser Werkstoff angeordnet ist.

Die Gegenstellen dieser Kontakte 15 können gemäß einer weiteren Ausführungsvariante des Gleitlagers an einer Lageraufnahme 17 angeordnet sein, wie dies in fig. 4 dargestellt ist. Diese Figur zeigt einen Teil des Gleitlagers, nämlich einen Lagerdeckel, der die Lageraufnahme 17 bildet. Der Lagerdeckel kann beispielsweise Teil eines Pleuels sein. An einer radial inneren Oberfläche 18 der Lageraufnahme 17 wird das zumindest eine Gleitlagerelement 1 (gegebenenfalls mit Spreizung) anliegend angeordnet, wie dies an sich bekannt ist. Auf dieser radial inneren Oberfläche 18 sind elektrische Kontakte 19 angeordnet, an die einerseits die Kontakte 15 des Gleitlagerelementes 1 (Fig. 3) anliegen, und die andererseits elektrisch leitend mit weiteren elektrischen oder elektronischen Komponenten verbunden sind.

Die elektrischen Kontakte 19 an der Lageraufnahme 17 sind generell so positioniert, dass die elektrischen Kontakte 15 des Gleitlagerelementes 1 durch dessen Einbau in die Lageraufnahme 17 an diesen elektrischen Kontakten 19 der Lageraufnahme anliegen. In der in Fig. 4 dargestellten Ausführungsvariante der Lageraufnahme 17 sind elektrischen Kontakte 19 somit anschließend an eine Trennfläche 20 des Lagerdeckels angeordnet, sodass sie mit den elektrischen Kontakten 15 des Gleitlagerelementes 1 gemäß Fig. 4 elektrisch leitend verbunden werden können.

Obwohl voranstehend ausgeführt wurde, dass die elektrischen Kontakte 15 im Bereich der Stirnfläche 12 (Fig. 2) angeordnet sein können, können diese generell am Lagerrücken, d.h. der äußeren Mantelfläche des Gleitlagerelementes 1, angeordnet werden. Die elektrischen Kontakte 19 der Lageraufnahme 17 sind dementsprechend anders an der Oberfläche 18 der Lageraufnahme 17 positioniert.

Es an dieser Stelle erwähnt, dass in den Figuren 1 bis 8 verschiedene Ausführungsvarianten des Gleitlagerelementes 1 gezeigt sind, wobei für gleiche Teile gleiche Bezugszeichen bzw. Bauteilbezeichnungen verwendet werden. Um unnötige Wiederholungen zu vermeiden, wird dazu auf die detaillierte Beschreibung der jeweiligen (anderen) Figur(en) hingewiesen bzw. darauf Bezug genommen.

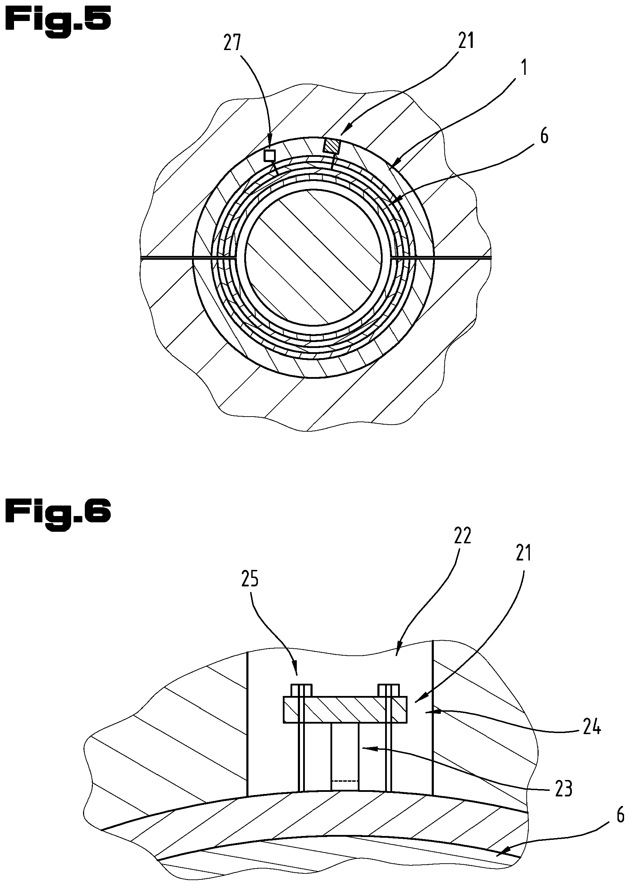

Nach einer anderen Ausführungsvariante des Gleitlagerelementes 1, die in den Fig. 5 und 6 dargestellt ist, kann vorgesehen sein, die Sensorschicht 6 mit einer Energieerzeugungseinrichtung 21 verbunden ist. Mithilfe dieser Energieerzeugungseinrichtung 21 ist es möglich, den zumindest einen Sensor, d.h. die Sensorschicht 21 autark mit elektrischer Energie zu versorgen, sodass also hierfür keine kabelgebundenen Anschlüsse des Gleitlagerelementes 1 nach außen erforderlich sind.

Die zumindest eine Energieerzeugungseinrichtung 21 (es können auch mehr als eine Energieerzeugungseinrichtung 21 angeordnet sein) ist im dargestellten Ausführungsbeispiel des Gleitlagers im bzw. auf dem zumindest einen Gleitlagerelement 1 angeordnet, beispielsweise in einer Ausnehmung 22 im Gleitlagerelement 1, wie dies aus Fig. 6 ersichtlich ist, die ein Detail des Gleitlagers nach Fig. 5 zeigt. Es sei jedoch darauf hingewiesen, dass diese konkret dargestellte Anordnung der Energieerzeugungseinrichtung 21 keinerlei beschränkenden Charakter hat, sondern lediglich der Erläuterung der Erfindung dient. Konstruktiv kann die Anordnung auch anders gelöst sein.

Die Energieerzeugungseinrichtung 21 weist zumindest ein Piezoelement 23 auf, das in Fig. 6 dargestellt ist. Je nach benötigter Energiemenge kann auch mehr als ein Piezoelement 23 in der Gleitlageranordnung 1 zur Erzeugung von elektrischer Energie angeordnet sein, beispielsweise in Form eines Piezoelementpaketes.

Das zumindest eine Piezoelement 23 kann auch als Multilayer-Stapel, d.h. ein mehrlagiges Piezoelement 23 mit mehreren übereinander angeordneten piezoelektrischen Elementen, ausgeführt sein.

Das Piezoelement 23 kann eine beliebige Querschnittsform aufweisen, beispielsweise eine kreisrunde oder eine viereckige, wie z.B. eine quadratische.

Dieses Piezoelement 23 kann auf Druck vorgespannt angeordnet sein. Dazu kann, wie in Fig. 6 dargestellt, ein Druckbalken 24 auf dem Piezoelement 23 aufliegend angeordnet sein. Der Druckbalken 24 kann über zwei Schauben 25 befestigt sein.

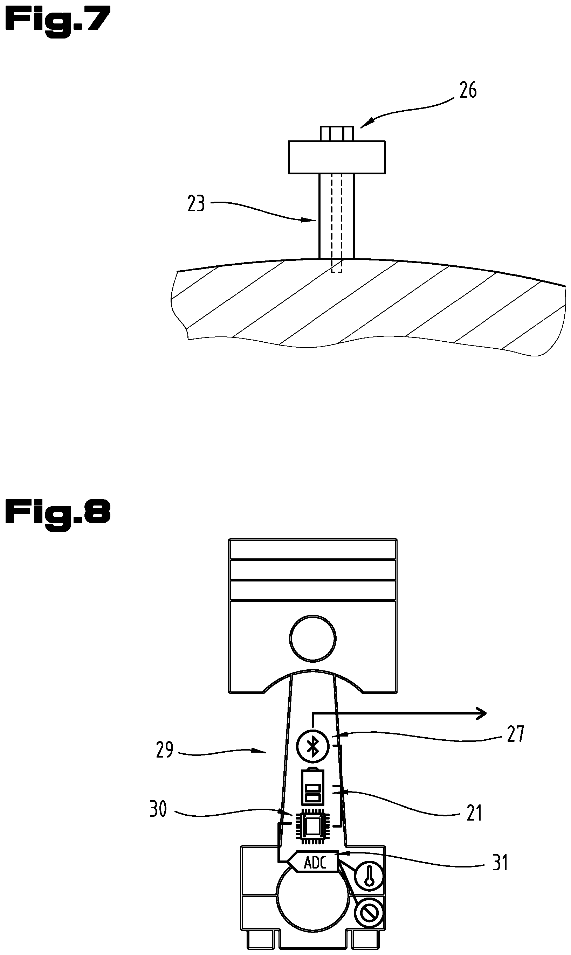

Alternativ kann vorgesehen sein, wie dies Fig. 7 zeigt, dass oberhalb des Piezoelementes 23 eine Einstellschraube 26 angeordnet ist, mit deren Verstellung eine Veränderung des auf das Piezoelement 23 einwirkenden Druckes vorgenommen werden kann.

Prinzipiell kann das zumindest eine Piezoelement 23 auch anderes auf Druck vorgespannt werden, beispielsweise mittels eines Federelements, etc.

Bevorzugt wird das zumindest eine Piezoelement 23 durch die Vorspannung nicht verdreht, d.h. dass die beiden Stirnflächen (obere und untere Stirnfläche) des Piezoelementes 23 durch die Verspannung nicht entlang der Längsmittelachse durch das Piezoelement 23 gegeneinander verdreht werden.

Bei der beschriebenen Anordnung der Vorspannung ist das Piezoelement 23 freistehend auf bzw. in dem Gleitlagerelement 1 angeordnet, wie dies aus Fig. 6 ersichtlich ist. Es besteht jedoch auch die Möglichkeit, dass das Piezoelement 23 in einer Ausnehmung angeordnet wird, die hinsichtlich Größe und Form des Querschnitts dem des Piezoelementes 23 entspricht, sodass dieses in die Ausnehmung eingeschoben werden kann und in diese Ausnehmung auch noch seitlich gestützt bzw. geführt werden kann.

Nur der Vollständigkeit halber sein darauf hingewiesen, dass auf die Wiedergabe der Funktionsweise eines Piezoelementes verzichtet wird, da diese ausführlich in der Literatur beschrieben ist und dem Fachmann auch bekannt ist.

Das zumindest eine Piezoelement 8 kann unter einem Druck vorgespannt sein, der ausgewählt ist aus einem Bereich von 5 MPa bis 50 MPa, insbesondere von 5 MPa bis 30 MPa.

Das zumindest eine Piezoelement 23 kann beispielsweis aus Blei-Zirkonat-Titanat (PZT) oder Bariumtitanat bestehen. Es sind aber auch andere piezoelektrische Werkstoffe einsetzbar.

Die Energieerzeugungseinrichtung 21 kann auch durch andere Elemente gebildet sein, beispielsweise eine induktive Energieversorgungseinrichtung 21 oder eine Energieerzeugungseinrichtung 21 die den Seebeck-Effekt nutzt.

Es ist weiter gemäß einer anderen Ausführungsvariante des Gleitlagerelementes 1 möglich, dass die Sensorschicht 6 mit einer Datenübertragungseinrichtung 27 verbunden ist, die im oder am Gleitlagerelement 1 angeordnet ist, wie dies in Fig. 5 ebenfalls schematisch dargestellt ist. Bevorzugt ist die Datenübertragungseinrichtung 27zur drahtlosen Datenübertragung ausgebildet, beispielsweise über Bluetooth und/oder Zygbee und/oder Wlan und/oder LoWPAN und/oder ZigBee und/oder ANT/ANT, etc. Gegebenenfalls kann die Datenübertragungseinrichtung 27 ebenfalls von der Energieerzeugungseinrichtung 21 mit elektrischer Energie versorgt werden.

Bevorzugt wird die aus voranstehenden Gründen eine Vierleitermessmethode angewandt, beispielsweise in Form einer Wheatstone-Brücke. Es kann aber auch ein anderes Verfahren angewandt werden, z.B. ein Konstantstromverfahren.

Um nicht mit dem Messergebnis an sich im Zusammenhang stehende Temperatureinflüsse auf die Messung ausgleichen zu können, besteht nach einer weiteren Ausführungsvariante die Möglichkeit, dass die Sensorschicht 6 eine zusätzliche Leiterschleife 28 für die Temperaturkompensation bei der Messung aufweist, wie dies aus Fig. 3 ersichtlich ist.

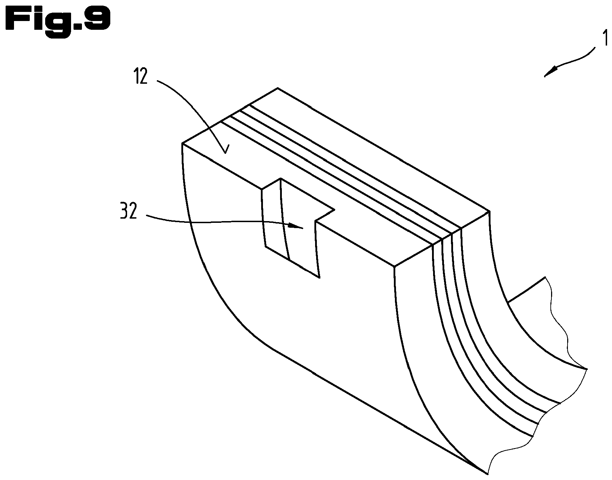

Fig. 9 zeigt eine Ausführung eines Gleitlagers in Form eines Pleuels. Diese Pleuel weist eine Pleuelschaft 29 auf, der einen Teil des großen Pleuelauges und damit einen Teil der Lageraufnahme 17 bildet. Auf und/oder zumindest teilweise in dem Pleuelschaft und/oder auf und/oder zumindest teilweise in der Lageraufnahme 17 kann eine Telemetrie-Vorrichtung bzw. Bestandteile hiervon, wie z.B. die Datenübertragungseinrichtung 27, die Energieerzeugungseinrichtung 21, ein Mikroprozessor 30, ein Analog-Digital-Wandler 31, etc. angeordnet sein.

Es ist aber auch möglich, dass nach einer anderen Ausführungsvariante des Gleitlagerelementes 1 vorgesehen ist, dass an der radialen Stirnfläche 12 des Gleitlagerelementes 1 zumindest eine Vertiefung 32 ausgebildet ist, die sich von dort in den Lagerrücken erstreckt, wie dies aus Fig. 9 ersichtlich ist. In dieser Vertiefung 32 kann zumindest ein Teil der Telemetrie-Vorrichtung angeordnet sein, wie beispielswies der Mikroprozessor 30 (Fig. 8).

Die Ausführungsbeispiele zeigen mögliche Ausführungsvarianten, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Gleitlagerelementes 1 bzw. des Gleitlagers diese nicht zwingenderweise maßstäblich dargestellt sind.

**Bezugszeichenaufstellung**

| | | | |
|---|---|---|---|
| 1 | Gleitlagerelement | 31 | Mikroprozessor |
| 2 | Schicht | 32 | Vertiefung |
| 3 | Messvorrichtung | | |
| 4 | Gleitschicht | | |
| 5 | Isolierschicht | | |
| 6 | Sensorschicht | | |
| 7 | Isolierschicht | | |
| 8 | Lagermetallschicht | | |
| 9 | Schichtdicke | | |
| 10 | Schichtdicke | | |
| 11 | Leiterbahn | | |
| 12 | Stirnfläche | | |
| 13 | Stirnfläche | | |
| 14 | Stützschicht | | |
| 15 | Kontakt | | |
| 16 | Durchbruch | | |
| 17 | Lageraufnahme | | |
| 18 | Oberfläche | | |
| 19 | Kontakt | | |
| 20 | Trennfläche | | |
| 21 | Energieerzeugungseinrichtung | | |
| 22 | Ausnehmung | | |
| 23 | Piezoelement | | |
| 24 | Druckbalken | | |
| 25 | Schraube | | |
| 26 | Einstellschraube | | |
| 27 | Datenübertragungseinrichtung | | |
| 28 | Leiterschleife | | |
| 29 | Pleuelschaft | | |
| 30 | Analog-Digital-Wandler | | |

## Patentansprüche

1. Gleitlagerelement (1) umfassend eine erste Schicht (2) mit einer radial inneren Oberfläche, wobei auf der radial inneren Oberfläche der ersten Schicht (2) eine Messvorrichtung (3) angeordnet ist, die in der angegebenen Reihenfolge eine erste vollflächig angeordnete elektrische Isolierschicht (5), eine zur Ausbildung von Leiterbahnen (11) strukturierte Sensorschicht (6) und eine zweite vollflächig angeordnete elektrische Isolierschicht (7) aufweist, wobei auf der zweiten elektrischen Isolierschicht (7) eine Gleitschicht (4) vollflächig angeordnet ist, **dadurch gekennzeichnet, dass** die erste elektrische Isolierschicht (5) unmittelbar auf der gesamten radial inneren Oberfläche der ersten Schicht (2) mit einem PVD-Verfahren abgeschieden ist, dass weiter auch die Sensorschicht (6) und die zweite elektrische Isolierschicht (7) mit einem PVD-Verfahren abgeschieden sind, wobei die Sensorschicht (6) auf der gesamten radial inneren Oberfläche der ersten elektrischen Isolierschicht (5) vollflächig abgeschieden und zur Ausbildung der Leiterbahnen (11) strukturiert ist und die zweite elektrische Isolierschicht (7) auf die gesamte radial innere Oberfläche der Sensorschicht (6) vollflächig abgeschieden ist, und dass die Gleitschicht (4) eine mittels eines PVD-Verfahrens abgeschiedene Schicht oder eine Gleitlackschicht ist und auf der radial inneren Oberfläche der zweiten elektrischen Isolierschicht (7) vollflächig abgeschieden ist.

2. Gleitlagerelement (1) nach Anspruch 1, **dadurch gekennzeichnet, dass** die Gleitschicht (4) eine Sputterschicht ist.

3. Gleitlagerelement (1) nach einem der Ansprüche 1 oder 2, **dadurch gekennzeichnet, dass** auf der Gleitschicht (4) eine Einlaufschicht angeordnet ist.

4. Gleitlagerelement (1) nach einem der Ansprüche 1 bis 3, **dadurch gekennzeichnet, dass** zumindest eine der ersten und der zweiten Isolierschicht (5, 7) durch Al₂O₃ und/oder SiO₂ gebildet ist.

5. Gleitlagerelement (1) nach einem der Ansprüche 1 bis 4, **dadurch gekennzeichnet, dass** zumindest eine der ersten und der zweiten Isolierschicht (5, 7) eine Schichtdicke (9) zwischen 2 µm und 8 µm aufweist.

6. Gleitlagerelement (1) nach einem der Ansprüche 1 bis 5, **dadurch gekennzeichnet, dass** die Sensorschicht (6) durch Chrom oder eine Chrom-Nickel-Legierung gebildet ist.

7. Gleitlagerelement (1) nach einem der Ansprüche 1 bis 6, **dadurch gekennzeichnet, dass** die Sensorschicht (6) eine Schichtdicke (10) zwischen 0,1 µm und 4 µm aufweist.

8. Gleitlagerelement (1) nach einem der Ansprüche 1 bis 7, **dadurch gekennzeichnet, dass** die Sensorschicht (6) zumindest in der am stärksten belasteten Zone der Gleitschicht (4) angeordnet ist.

9. Gleitlagerelement (1) nach einem der Ansprüche 1 bis 8, **dadurch gekennzeichnet, dass** an einer radial äußersten Schicht elektrische Kontakte (15) angeordnet sind, die mit der Sensorschicht (6) elektrisch leitend verbunden sind.

10. Gleitlagerelement (1) nach einem der Ansprüche 1 bis 9, **dadurch gekennzeichnet, dass** die Sensorschicht (6) mit einer Datenübertragungseinrichtung (27) verbunden ist, wobei die Datenübertragungseinrichtung (27) zur drahtlosen Datenübertragung ausgebildet ist.

11. Gleitlagerelement (1) nach einem der Ansprüche 1 bis 10, **dadurch gekennzeichnet, dass** die Sensorschicht (6) mit einer Energieerzeugungseinrichtung (21) verbunden ist.

12. Gleitlagerelement (1) nach einem der Ansprüche 1 bis 11, **dadurch gekennzeichnet, dass** die Sensorschicht (6) mit einer Messbrücke verbunden ist.

13. Gleitlagerelement (1) nach einem der Ansprüche 1 bis 12, **dadurch gekennzeichnet, dass** die Sensorschicht (6) eine Leiterschleife (28) für die Temperaturkompensation bei der Messung aufweist.

14. Gleitlagerelement (1) nach einem der Ansprüche 1 bis 13, **dadurch gekennzeichnet, dass** an einer radialen Stirnfläche (12) eine Vertiefung (32) ausgebildet ist, in der eine Telemetrie-Vorrichtung angeordnet ist.

15. Gleitlager umfassend eine Lageraufnahme (17) mit einer radial inneren Oberfläche (18) und zumindest ein Gleitlagerelement (1), dass an der radial inneren Oberfläche (18) der Lageraufnahme (17) anliegend angeordnet ist, **dadurch gekennzeichnet, dass** das zumindest eine Gleitlagerelement (1) durch eine Gleitlagerelement (1) nach einem der Ansprüche 1 bis 14 gebildet ist.

16. Gleitlager nach Anspruch 15, **dadurch gekennzeichnet, dass** an der radial inneren Oberfläche (18) der Lageraufnahme (17) elektrische Kontakte (19) angeordnet sind.

17. Gleitlager nach einem der Ansprüche 15 oder 16, **dadurch gekennzeichnet, dass** an oder zumindest teilweise in der Lageraufnahme (17) eine Telemetrie-Vorrichtung angeordnet ist.

18. Verfahren zur Herstellung eines Gleitlagerelementes (1), nach dem auf einer radial inneren Oberfläche einer ersten Schicht (2) eine Messvorrichtung (3) ausgebildet wird, wozu in der angegebenen Reihenfolge eine erste elektrische Isolierschicht (5) vollflächig, eine Sensorschicht (6), die zur Ausbildung von Leiterbahnen (11) strukturiert wird, und eine zweite elektrische Isolierschicht (7) vollflächig abgeschieden werden, wobei auf der zweiten elektrischen Isolierschicht (7) eine Gleitschicht (4) vollflächig angeordnet wird, **dadurch gekennzeichnet, dass** die erste elektrische Isolierschicht (5) unmittelbar auf der gesamten radial inneren Oberfläche der ersten Schicht (2) mit einem PVD-Verfahren abgeschieden wird, dass weiter auch die Sensorschicht (6) und die zweite elektrische Isolierschicht (7) mit einem PVD-Verfahren abgeschieden werden, wobei die Sensorschicht (6) auf der gesamten radial inneren Oberfläche der ersten elektrischen Isolierschicht (5) vollflächig abgeschieden und zur Ausbildung der Leiterbahnen (11) strukturiert wird und die zweite elektrische Isolierschicht (7) auf die gesamte radial innere Oberfläche der Sensorschicht (6) vollflächig abgeschieden wird, und dass die Gleitschicht (4) mittels eines PVD-Verfahrens abgeschieden wird oder als Gleitlackschicht ausgebildet wird und auf der radial inneren Oberfläche der zweiten elektrischen Isolierschicht (7) vollflächig abgeschieden wird.

19. Verfahren nach Anspruch 18, **dadurch gekennzeichnet, dass** die Sensorschicht (6) vollflächig abgeschieden und danach strukturiert wird.

20. Verfahren nach Anspruch 19, **dadurch gekennzeichnet, dass** die Strukturierung mit einem Laser, insbesondere einem Ultrakurzpuls-Laser, und/oder unter Verwendung von zumindest einer Maske durchgeführt wird.

21. Verfahren nach Anspruch 19 oder 20, **dadurch gekennzeichnet, dass** zumindest eine der Schichten der Messvorrichtung (3) mittels Reaktivsputtern hergestellt wird.

## Claims

1. A sliding bearing element (1) comprising a first layer (2) having a radially inner surface, wherein a measuring device (3) is arranged on the radially inner surface of the first layer (2), which measuring device (3) comprises, in the order indicated, a first electrical insulating layer (5) arranged over the entire surface, a sensor layer (6) structured to form conducting paths (11) and a second electrical insulating layer (7) arranged over the entire surface, wherein a sliding layer (4) is arranged over the entire surface on the second electrical insulating layer (7), **characterized in that** the first electrical insulating layer (5) is deposited directly over the entire radially inner surface of the first layer (2) using a PVD method, that, furthermore, the sensor layer (6) and the second electrical insulating layer (7) are also deposited using a PVD method, wherein the sensor layer (6) is deposited over the entire radially inner surface of the first electrical insulating layer (5) and is structured to form the conducting paths (11), and the second electrical insulating layer (7) is deposited over the entire radially inner surface of the sensor layer (6), and that the sliding layer (4) is a layer deposited by means of a PVD method or a sliding lacquer layer and is deposited over the entire radially inner surface of the second electrical insulating layer (7).

2. The sliding bearing element (1) according to claim 1, **characterized in that** the sliding layer (4) is a sputtering layer.

3. The sliding bearing element (1) according to one of claims 1 or 2, **characterized in that** a running-in layer is arranged on the sliding layer (4).

4. The sliding bearing element (1) according to one of claims 1 to 3, **characterized in that** at least one of the first and the second insulating layers (5, 7) is formed by Al₂O₃ and/or SiO₂.

5. The sliding bearing element (1) according to one of claims 1 to 4, **characterized in that** at least one of the first and the second insulating layers (5, 7) has a layer thickness (9) between 2 µm and 8 µm.

6. The sliding bearing element (1) according to one of claims 1 to 5, **characterized in that** the sensor layer (6) is formed by chromium or a chromium-nickel alloy.

7. The sliding bearing element (1) according to one of claims 1 to 6, **characterized in that** the sensor layer (6) has a layer thickness (10) of between 0.1 µm and 4 µm.

8. The sliding bearing element (1) according to one of claims 1 to 7, **characterized in that** the sensor layer (6) is arranged at least in the most heavily loaded zone of the sliding layer (4).

9. The sliding bearing element (1) according to one of claims 1 to 8, **characterized in that** electrical contacts (15) are arranged on a radially outermost layer, which electrical contacts (15) are connected to the sensor layer (6) in an electrically conductive manner.

10. The sliding bearing element (1) according to one of claims 1 to 9, **characterized in that** the sensor layer (6) is connected to a data transmission device (27), wherein the data transmission device (27) is designed for wireless data transmission.

11. The sliding bearing element (1) according to one of claims 1 to 10, **characterized in that** the sensor layer (6) is connected to an energy generating device (21).

12. The sliding bearing element (1) according to one of claims 1 to 11, **characterized in that** the sensor layer (6) is connected to a measuring bridge.

13. The sliding bearing element (1) according to one of claims 1 to 12, **characterized in that** the sensor layer (6) has a conductor loop (28) for temperature compensation during measuring.

14. The sliding bearing element (1) according to one of claims 1 to 13, **characterized in that**, on a radial end face (12), a recess (32) is formed, in which a telemetry device is arranged.

15. A sliding bearing comprising a bearing receptacle (17) having a radially inner surface (18) and at least one sliding bearing element (1) which is arranged to abut the radially inner surface (18) of the bearing receptacle (17), **characterized in that** the at least one sliding bearing element (1) is formed by a sliding bearing element (1) according to one of claims 1 to 14.

16. The sliding bearing according to claim 15, **characterized in that** electrical contacts (19) are arranged on the radially inner surface (18) of the bearing receptacle (17).

17. The sliding bearing according to one of claims 15 or 16, **characterized in that** a telemetry device is arranged on or at least partially in the bearing receptacle (17).

18. A method for manufacturing a sliding bearing element (1), according to which a measuring device (3) is formed on a radially inner surface of a first layer (2), for which purpose are deposited, in the order indicated, a first electrical insulating layer (5) over the entire surface, a sensor layer (6) structured to form the conducting paths (11) and a second electrical insulating layer (7) over the entire surface, wherein a sliding layer (4) is arranged on the second electrical insulating layer (7) over the entire surface, **characterized in that** the first electrical insulating layer (5) is deposited directly on the entire radially inner surface of the first layer (2) using a PVD method, that, furthermore, the sensor layer (6) and the second electrical insulating layer (5) are also deposited using a PVD method, wherein the sensor layer (6) is deposited over the entire radially inner surface of the first electrical insulating layer (7) and is structured to form the conducting paths (11), and the second electrical insulating layer (7) is deposited over the entire radially inner surface of the sensor layer (6), and that the sliding layer (4) is deposited by means of a PVD method or is formed as a sliding lacquer layer and is deposited over the entire radially inner surface of the second electrical insulating layer (7).

19. The method according to claim 18, **characterized in that** the sensor layer (6) is deposited over the entire surface and is subsequently structured.

20. The method according to claim 19, **characterized in that** the structuring is carried out with a laser, in particular an ultrashort pulse laser, and/or using at least one mask.

21. The method according to claim 19 or 20, **characterized in that** at least one of the layers of the measuring device (3) is produced by means of reactive sputtering.

## Revendications

1. Élément de palier lisse (1) comprenant une première couche (2) avec une surface radiale interne, dans lequel, sur la surface radiale interne de la première couche (2), est disposé un dispositif de mesure (3) qui comprend, dans l'ordre indiqué, une première couche électriquement isolante (5) disposée sur toute la surface, une couche de capteur (6) structurée pour la formation de pistes conductrices (11) et une deuxième couche électriquement isolante (7) disposée sur toute le surface, dans lequel, sur la deuxième couche électriquement isolante (7), est disposée une couche de glissement (4) sur toute la surface, **caractérisé en ce que** la première couche électriquement isolante (5) est déposée directement sur toute la surface radiale interne de la première couche (2) à l'aide d'un procédé PVD, **en ce que** la couche de capteur (6) et la deuxième couche électriquement isolante (7) sont également déposées à l'aide d'un procédé PVD, dans lequel la couche de capteur (6) est déposée sur toute la surface radiale interne de la première couche électriquement isolante (5) et est structurée pour la formation des pistes conductrices (11) et la deuxième couche électriquement isolante (7) est déposée sur toute la surface radiale interne de la couche de capteur (6) et **en ce que** la couche de glissement (4) est une couche déposée au moyen d'un procédé PVD ou une couche de peinture de glissement et est déposée sur toute la surface radiale interne de la deuxième couche électriquement isolante (7).

2. Élément de palier lisse (1) selon la revendication 1, **caractérisé en ce que** la couche de glissement (4) est une couche déposée par pulvérisation.

3. Élément de palier lisse (1) selon la revendication 1 ou 2, **caractérisé en ce que**, sur la couche de glissement (4), est disposée une couche d'entrée.

4. Élément de palier lisse (1) selon l'une des revendications 1 à 3, **caractérisé en ce qu'**au moins une parmi la première et la deuxième couches isolantes (5, 7) est constitué d'Al₂O₃ et/ou de SiO₂.

5. Élément de palier lisse (1) selon l'une des revendications 1 à 4, **caractérisé en ce qu'**au moins une parmi la première et la deuxième couches isolantes (5, 7) présente une épaisseur de couche (9) entre 2 µm et 8 µm.

6. Élément de palier lisse (1) selon l'une des revendications 1 à 5, **caractérisé en ce que** la couche de capteur (6) est constituée de chrome ou est un alliage chrome-nickel.

7. Élément de palier lisse (1) selon l'une des revendications 1 à 6, **caractérisé en ce que** la couche de capteur (6) présente une épaisseur de couche (9) entre 0,1 µm et 4 µm.

8. Élément de palier lisse (1) selon l'une des revendications 1 à 7, **caractérisé en ce que** la couche de capteur (6) est disposée au moins dans la zone la plus sollicitée de la couche de glissement (4).

9. Élément de palier lisse (1) selon l'une des revendications 1 à 8, **caractérisé en ce que**, au niveau de la couche la plus extérieure radialement, sont disposés des contacts électriques (15) reliés électriquement avec la couche de capteur (6).

10. Élément de palier lisse (1) selon l'une des revendications 1 à 9, **caractérisé en ce que** la couche de capteur (6) est reliée avec un dispositif de transmission de données (27), dans lequel le dispositif de transmission de données (27) est conçu pour la transmission de données sans fil.

11. Élément de palier lisse (1) selon l'une des revendications 1 à 10, **caractérisé en ce que** la couche de capteur (6) est reliée avec un dispositif de production d'énergie (21).

12. Élément de palier lisse (1) selon l'une des revendications 1 à 11, **caractérisé en ce que** la couche de capteur (6) est reliée avec un pont de mesure.

13. Élément de palier lisse (1) selon l'une des revendications 1 à 12, **caractérisé en ce que** la couche de capteur (6) comprend une boucle conductrice (28) pour la compensation de température lors de la mesure.

14. Élément de palier lisse (1) selon l'une des revendications 1 à 13, **caractérisé en ce que**, au niveau d'une face frontale radiale (12), est réalisée une cavité (32) dans laquelle est disposé un dispositif de télémétrie.

15. Palier lisse comprenant un logement de palier (17) avec une surface radiale interne (18) et au moins un élément de palier lisse (1), qui est disposé de façon à s'appuyer contre la surface radiale interne (18) du logement de palier (17), **caractérisé en ce que** l'au moins un élément de palier lisse (1) est constitué un élément de palier lisse (1) selon l'une des revendications 1 à 14.

16. Palier lisse selon la revendication 15, **caractérisé en ce que**, au niveau de la surface radiale interne (18) du logement de palier (17), sont disposés des contacts électriques (19).

17. Palier lisse selon l'une des revendications 15 ou 16, **caractérisé en ce que** sur ou au moins partiellement dans le logement de palier (17), est disposé un dispositif de télémétrie.

18. Procédé de fabrication d'un élément de palier lisse (1) selon lequel, sur une surface radiale interne d'une première couche (2), est réalisé un dispositif de mesure (3), une première couche électriquement isolante (5) sur toute la surface, une couche de capteur (6) structurée pour la formation de pistes conductrices (11), et une deuxième couche électriquement isolante (7) sur toute la surface étant déposées pour cela dans l'ordre indiqué, dans lequel, sur la deuxième couche électriquement isolante (7) est disposée une couche de glissement (4) sur toute la surface, **caractérisé en ce que** la première couche électriquement isolante (5) est déposée directement sur toute la surface radiale interne de la première couche (2) à l'aide d'un procédé PVD, **en ce que** la couche de capteur (6) et la deuxième couche électriquement isolante (7) sont également déposées à l'aide d'un procédé PVD, dans lequel la couche de capteur (6) est déposée sur toute la surface radiale interne de la première couche électriquement isolante (5) et est structurée pour la formation des pistes conductrices (11) et la deuxième couche électriquement isolante (7) est déposée sur toute la surface radiale interne de la couche de capteur (6) et **en ce que** la couche de glissement (4) est déposée au moyen d'un procédé PVD ou est conçue comme une couche de peinture de glissement et est déposée sur toute la surface radiale interne de la deuxième couche électriquement isolante (7).

19. Procédé selon la revendication 18, **caractérisé en ce que** la couche de capteur (6) et déposée sur toute la surface puis structurée.

20. Procédé selon la revendication 19, **caractérisé en ce que** la structuration est effectuée avec un laser, plus particulièrement laser à impulsions ultra-courtes et/ou à l'aide d'au moins un masque.

21. Procédé selon la revendication 19 ou 20, **caractérisé en ce qu'**au moins une des couches du dispositif de mesure (3) est réalisée au moyen d'une pulvérisation réactive.
